# EUROPÄISCHE PATENTSCHRIFT

(11) **EP 0 840 715 B1**
(45) Veröffentlichungstag und Bekanntmachung des Hinweises auf die Patenterteilung: **08.10.2003**
(21) Anmeldenummer: 97920481.5
(22) Anmeldetag: 21.05.1997
(51) Int. Cl.: C05F 17/00, C05F 9/00, C05F 9/02

(54) **THERMOMECHANISCHES VERFAHREN FÜR DIE BEHANDLUNG VON ABFÄLLEN**
THERMO-MECHANICAL METHOD FOR GARBAGE TREATMENT
PROCEDE THERMO-MECANIQUE POUR LE TRAITEMENT DES DECHETS

(30) Priorität: 22.05.1996 CH 134996
(43) Veröffentlichungstag der Anmeldung: 13.05.1998
(73) Patentinhaber: Ipete AG, 3250 Lyss (CH)
(72) Erfinder: TSCHUDI, Jean-Pierre, CH-2565 Jens (CH)
(74) Vertreter: Arato, Laszlo
(86) Internationale Anmeldenummer: CH9700199
(87) Internationale Veröffentlichungsnummer: WO97044296

(56) Entgegenhaltungen:
- EP-A- 0 506 139
- CA-A- 2 080 547

## Beschreibung

Die Erfindung betrifft ein Verfahren, gemäss dem Oberbegriff des Anspruchs 1.

Die Eliminierung der Abfälle ist für die Kommunen ein Dauerproblem, da weder die Deponierung noch die Müllverbrennung oder die Kompostierung sich als befriedigende Lösung erwiesen hat. Die Praxis hat gezeigt, dass die Deponie keine Lösung sondern die vorübergehende Kaschierung des Problems ist, dass nicht alles was sich verbrennen lässt, sinnvoll ist zu verbrennen und nicht alles, was vom Kompost angenommen wird, für die Natur nützlich und harmlos ist. Dementsprechend wird von der Kreislaufwirtschaft für die Entsorgung der Abfälle eine leistungsfähige, der Komplexität der Aufgaben bewusste und den Bedürfnissen fein abgestimmte Innovation verlangt, die in der Beschaffung kostengünstig ist, die Amortisation in absehbarer Zeit erlaubt und nicht zuletzt einen selbsttragenden Betriebshaushalt vorweisen kann.

Ein wichtiger Lösungsansatz dieser Aufgabe ist die Kompostierung kommunaler Abfälle in qualitativ hochwertigen Recyclinghumus. Bekannt ist ein im Pilotbetrieb mit Erfolg geprüfter Vorschlag, der so weit geht, dass die Mitarbeit der Abfallerzeuger in Anspruch genommen wird, indem die Vorselektionierung des Abfalls verlangt wird. Der Erzeuger selbst muss dafür sorgen, dass nur Stör- und Schadstoff befreiter, reiner Bioabfall in die Müllsammlung gelangt. Denn richtigerweise darf Bioabfall keine Batterien, Haushalts-Chemikalien (wie Lösungsmittel, Farben, Lacke, Pflanzenbehandlungs-, Schädlingsbekämpfungs- und Autopflegemittel, Altmedikamente), keine Staubsaugerbeutel, Textilien, Windeln, Zigarettenkippen, Kunststoffe, Glas und nicht zuletzt keinerlei Metalle enthalten. Die Erfüllung dieses Postulats wird durch Massnahmen der Qualitätskontrolle überwacht, indem die im Einzugsgebiet operierenden SammelFahrzeuge mit Detektoren ausgerüstet sind, um die Annahme der Mülltonnen mit Schad- und Störstoffen verweigern zu können, und damit den Erzeuger zur Einsicht und zur erforderlichen Disziplin und Mitarbeit zu zwingen.

Wie der neuste Stand der Technik der Kompostierung zeigt, ist es möglich, innert nützlicher Zeit aus dem Biomüll einen gut verwertbaren Recyclinghumus zu erzeugen. Dazu wird der Biomüll auf einen mit versiegeltem Belag bedeckten und Lüftungs- und Entwässerungsrinnen aufweisenden Kompostierplatz gebracht und über die Lüftungs- und Entwässerungsrinnen in Mieten gestapelt. Die Mieten werden mit Thermometer- und Sauerstoffsonden bestückt, mit atmungsaktiven dreilagigen Abdeckplanen bedeckt und von Ventilatoren - in Funktion der Temperatur und der Sauerstoffzerrung - belüftet, so dass in der Miete dauernd Sauerstoffüberschuss herrscht. Die Rotte-Zeit der Intensivund Nachrotte solcher Anlagen beläuft sich auf insgesamt zwei Monate oder auf ein Drittel konventioneller Anlagen mit offenen Mieten. Recyclinghumus von guter Qualität hat seinen Preis und wird von der Land- und Gartenwirtschaft gekauft. Das erörterte Beispiel gilt aber nur für die organische Fraktion der kommunalen Abfälle, die anteilmässig im Jahresdurchschnitt höchstens die Hälfte der kommunalen Abfälle ausmacht. Daher ist die Kompostierung allein betrachtet keine brauchbare Lösung zur kommunalen Müllbeseitigung. Die Verwaltungen der Kommunen schätzen es sehr, wenn die Passanten öffentlicher Begegnungsstellen, (Einkaufszentren, Bahnhöfen, Sporttribünen usw.) die Mülleimer überhaupt benützen. Wie man weiss, fällt an diesen Stellen der Müll unsortiert an und es darf bezweifelt werden, ob diese anonymen Abfallerzeuger sich je für die Arbeit der Müllvorsortierung begeistern lassen.

Der Erfindung liegt die Aufgabe der ökologisch und ökonomisch optimalen Entsorgung kommunaler Abfälle im Sinne der Kreislaufwirtschaft zugrunde, wobei auf den direkten Einsatz von menschlicher Arbeit für die Aufbereitung der zugeführten Stoffe aus finanziellen, organisatorischen, ethischen und nicht zuletzt hygienischen Gründen verzichtet werden soll.

Erfindungsgemäss wird diese Aufgabe gelöst durch die kennzeichnenden Merkmale des Anspruchs 1.

Die durch die Erfindung erreichten Vorteile sind, dass an Stelle von zentralen Grossanlagen, auch lokale Lösungen, mit entsprechend kürzeren Transportwegen möglich sind, dass keine Nachsiebung der Rotte notwendig ist, und dass die Rottezeit auch modernster Verfahren gegenüber verkürzt und damit der Platzbedarf der Kompostierungsanlage mindestens halbiert, respektive der Kompostdurchsatz pro Flächeneinheit mindestens verdoppelt wird. Die Hygienisierung der Kompostaufbereitung schafft ein Qualitätsmerkmal des Recyclinghumus im nie dagewesenen Ausmass. Dadurch dass die thermomechanische Aufbereitung die automatisierte Sortierung, beispielsweise die hydromechanische Sortierung (BTA-Verfahren), unterstützt, wird die vollautomatisierte Aufbereitung unsortierter kommunaler Abfälle zum Kompost erreicht. Die Kombination dieser Verfahren erfüllt die geforderten Attribute, denn die vorgeschlagene Lösung ist energetisch autonom, betriebswirtschaftlich kostendeckend und investitionsmässig sparsam. Mit anderen Worten, dadurch dass der von Schad- und Störstoffen befreite Abfallbrei thermomechanisch zu lockerem bauschigem federndem Kompostmaterial aufbereitet wird, besteht die Möglichkeit der automatischen Aufbereitung von Hausmüll zu Kompostmaterial, wobei ein Teil des Mülls zu thermischer und elektrischer Energie gewandelt werden kann.

Das thermomechanisch aufbereitete Material eignet sich für die Kompostierung (Ausreifen und Stabilisieren) und ergibt einen Recyclinghumus des Rottegrads V und ist wohlriechend, locker, federnd, bauschig und frei von irgendwelchen Chemikalien, Zusatz- oder Nährstoffen und eignet sich hervorragend für die Verbesserung von Böden der Land- und Gartenwirtschaft. Die Finanzierung der Müllbeseitigung ist selbsttragend, denn die Müllgebühren und der Erlös des hochwertigen Recyclinghumus sowie der Preis der Altmetalle reichen für die mittelfristige Amortisation der Anlageninvestition und die Deckung der Betriebskosten.

Im folgenden wird die Erfindung anhand der beigefügten Zeichnung eines möglichen Ausführungsweges beispielsweise näher erläutert. Es zeigt:

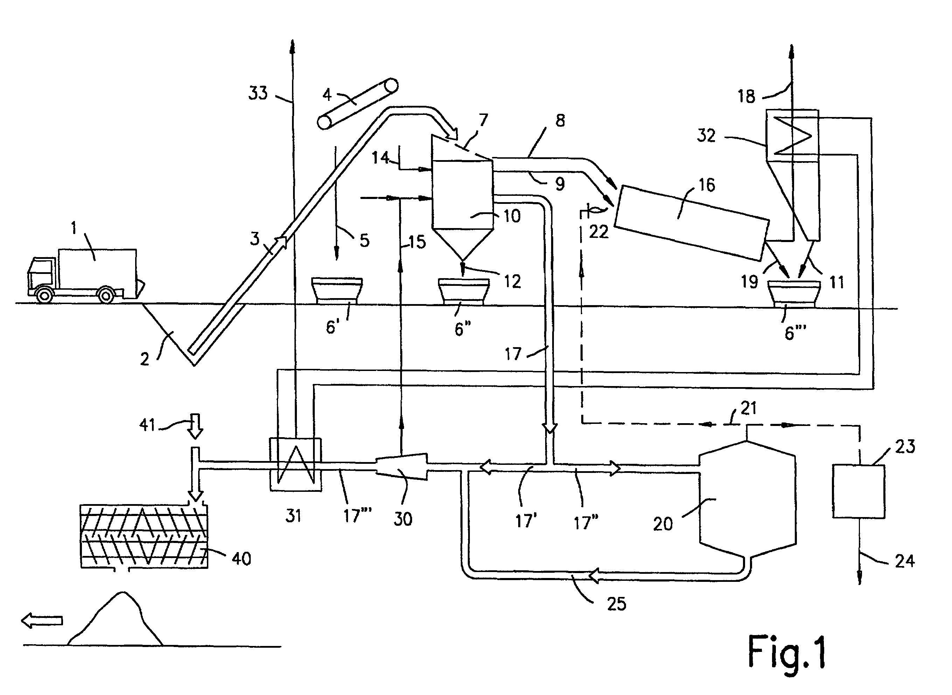

- Figur 1: ein Flussdiagramm zur schematischen Darstellung des Ablaufs des erfindugsgemässen Verfahrens.

Der im Müllfahrzeug 1 angelieferte kommunale Müll wird während des Sammelns verdichtet und zerquetscht, so dass keine sperrigen Teile in den Müllbunker 2 gelangen. Vom Müllbunker 2 wird der Müll auf einem offenen Transportband 3 zum Sieb 7 und zum Einweichtank 10 befördert. Unterwegs scheidet der Magnetabscheider 4 die Eisenteile 5 in den Sammelbehälter 6^{I} und das Sieb 7 die Grobteile 8 < 200x200 aus. Aus dem mit Prozesswasser 15 gefüllten Einweichtank 10, das je nach Bedarf mit Frischwasser 14 ergänzt werden kann, werden die Schwimmstoffe 9 (Plastik, Holz, Textilien) zusammen mit den Grobteilen 8 in den Drehofen 16 und den Schwerstoffen 12 (Steinzeug, Glas, Sand, Nichteisenmetalle) in den Sammelbehälter 6^{II} abgeführt. Im Einweichtank 10 werden die getränkten Müllteile von der erzwungenen Strömung zur Suspension 17 zerbreit.
Die Suspension 17^{I} wird in der Regel zur Dekanterzentrifuge 30 geführt, wo der wesentliche Teil des Prozesswassers 15 der Suspension 17^{I} entzogen und zum Einweichtank 10 rezirkuliert wird.
Ein Teil der Suspension 17^{II} gelangt periodisch (zweiwöchentlich) zum Faulturm 20, wo bei langsamem Rühren Biogas 21 entsteht. Mit dem Biogas 21 wird für den Prozess je nach Bedarf via Gasmotor/Generator 23 elektrischer Strom 24, oder mit dem Brenner 22 Wärme erzeugt, die mit den Abgasen 18 den Drehrohrofen 16 passiert und vom Wärmeaustauscher 32 zum Trockner 31 gelangt. Die permanente Biogasgewinnung bedingt mindestens zwei Faultürme 20, die abwechslungsweise entleert und gefüllt werden. Die ausgefaulte Suspension 25 wird wie die Suspension 17^{I} in der Dekanterzentrifuge 30 mechanisch, und im Trockner 31 mit Verdampfung der Brüden 33 thermisch entwässert, um schliesslich mit pflanzlichen Stoffen 41 in der Doppelschneckenpresse 40 thermomechanisch behandelt zu werden.

## Patentansprüche

1. Thermomechanisches Verfahren für die Behandlung von Abfällen (1), zur Herstellung von Recyclinghumus **dadurch gekennzeichnet, dass** die Abfälle (1) unsortiert und kommunaler Herkunft sind und das Verfahren bis zur Hygienisierung der Abfälle voll automatisch wie folgt verläuft:
- in einer ersten Stufe
die Eisen- (5) und Grobteile (8) sowie die Schwimm(9) und Schwerstoffe (12) der Abfälle (1) ausgeschieden und die im Einweichtank (10) getränkte Müllteile zur Suspension (17) zerbreit entwässert werden und
- in einer zweiten Stufe
die Suspension (17^{I}) mit pflanzlichen Stoffen (41) in eine Doppelschneckenpresse (40) befördert wird, wo die Abfälle (17^{III}) mit den pflanzlichen Stoffen (41) hygienisiert und unter hohem mechanischem Druck, und hohen Reib- und Schärkräften so zerrieben werden, dass eine bauschige, federnde lockere Struktur entsteht und
- in einer dritten Stufe
das bauschige, federnd lockere Kompostmaterial gehäuft und unter atmungsaktiven Abdeckplanen und der partiellen Zufuhr von Luftsauerstoff, zwei bis drei Wochen lang unter Sauerstoffüberschuss gehalten wird, wo es sich ohne mechanische Umsetzung der Miete zu hochwertigem Recyclinghumus des Reifegrades V wandelt.

2. Thermomechanisches Verfahren nach Anspruch 1 **dadurch gekennzeichnet, dass** das Verfahren für die Behandlung von störstoffbefreitem Bio-Müll verwendet wird.

3. Thermomechanisches Verfahren nach Anspruch 1 **dadurch gekennzeichnet, dass** ein Brei aus nass selektiertem Haushaltsmüll behandelt wird.

4. Thermomechanisches Verfahren nach Anspruch 1 und 3 **dadurch gekennzeichnet, dass** der Brei aus nass selektiertem Haushaltsmüll vor der Behandlung nach Anspruch 1 thermisch vorgetrocknet wird.

5. Thermomechanisches Verfahren nach den Ansprüchen 1 bis 4 **dadurch gekennzeichnet, dass** der Brei aus nass selektiertem Haushaltsmüll nach der Trocknung mit Prozesswärme für die Behandlung nach Anspruch 1 mit pflanzlichen Stoffen vermischt wird.

## Claims

1. A thermo-mechanical method for treating waste (1) for producing recycled humus, **characterised in that** the waste (1) is unsorted municipal waste and the method, up to the sanitisation of the waste, proceeds fully automatically in the manner below:
- in a first step
the ferrous (5) and coarse parts (8) and also the floating (9) and heavy matter (12) of the waste (1) are separated and the waste parts which are soaked in a steeping tank (10) are dewatered to a slurry to produce a suspension (17) and
- in a second step
the suspension (17^{I}) is conveyed with vegetable matter (41) to a twin-screw extruder (40) in which the waste (17^{III}) is sanitised with the vegetable matter (41) and ground under high mechanical pressure and high frictional and warping forces to create a bulky, springy, loose structure and
- in a third step
the bulky, springily loose compost material is piled into a heap under breathable cover sheets enabling a partial supply of atmospheric oxygen, where it is stored for two to three weeks with an excess of oxygen and converted into high-quality recycled humus of Ripeness Class V without mechanical turnover of the heap.

2. A thermo-mechanical method according to Claim 1, **characterised in that** the method is used for treating decontaminated biological waste.

3. A thermo-mechanical method according to Claim 1, **characterised in that** a slurry of wet-selected household waste is treated.

4. A thermo-mechanical method according to Claims 1 and 3, **characterised in that** the slurry of wet-selected household waste is thermally pre-dried prior to the treatment according to Claim 1.

5. A thermo-mechanical method according to Claims 1 to 4, **characterised in that** the slurry of wet-selected household waste is mixed with vegetable matter after being dried with process heat for the treatment according to Claim 1.

## Revendications

1. Procédé thermomécanique pour le traitement de déchets
(1) pour produire du terreau de recyclage **caractérisé en ce que** des déchets (1) sont d'origine communale et non-triés et que le procédé se déroule de façon entièrement automatique jusqu'à l'hygiénisation des déchets comme suit :
- dans une première étape
les grosses pièces (8) et les pièces ferriques (5) ainsi que les matières flottantes (9) et lourdes (12) sont séparées des déchets (1) et les morceaux d'ordures imbibés dans la cuve de détrempage (10) qui sont réduits en pâte pour former une suspension (17) sont asséchés et
- dans une deuxième étape
la suspension (17^{I}) avec les matières végétales (41) est transportée vers une boudineuse à double vis (40), où les déchets (17^{III}) sont hygiénisés avec les matières végétales (41) et broyés sous l'effet d'une haute pression mécanique et de grandes forces de friction et de cisaillement de façon à créer une structure bouffante, élastique, poudreuse et
- dans une troisième étape
la matière de compostage bouffante, élastique et poudreuse est amassée et maintenue, sous des bâches de couverture respirantes avec une alimentation partielle en oxygène atmosphérique, sous surplus d'oxygène, où elle est transformée sans déplacement mécanique des meules en un terreau de haute qualité d'un degré de maturité V.

2. Procédé thermomécanique selon la revendication 1, **caractérisé en ce que** le procédé pour le traitement d'ordures bio exemptes de substances parasites est utilisé.

3. Procédé thermomécanique selon la revendication 1, **caractérisé en ce qu'**une pâte faite à partir d'ordures ménagères triées à l'eau est traitée.

4. Procédé thermomécanique selon la revendication 1 et 3, **caractérisé en ce que** la pâte faite à partir d'ordures ménagères triées à l'eau est pré-séchée avant le traitement selon la revendication 1.

5. Procédé thermomécanique selon les revendications 1 à 4 **caractérisé en ce qu'**après le séchage avec de la chaleur issue du processus, la pâte faite à partir d'ordures ménagères triées à l'eau est mélangée avec des matières végétales pour le traitement selon la revendication 1.
